# EUROPÄISCHE PATENTANMELDUNG

(11) **EP 4 443 720 A1**
(43) Veröffentlichungstag der Anmeldung: **09.10.2024**
(21) Anmeldenummer: 23166981.3
(22) Anmeldetag: 06.04.2023
(51) Int. Cl.: H02K 15/06

(54) **FÜGEVERFAHREN UND FÜGEVORRICHTUNG ZUM EINFÜGEN EINER SPULENWICKLUNG IN EIN BAUTEIL EINER ELEKTRISCHEN MASCHINE UNTER AUSÜBEN EINER AXIALKRAFT**

(71) Anmelder: Grob-Werke GmbH & Co. KG, 87719 Mindelheim (DE)
(72) Erfinder: Ziegler, Manfred, 86856 Hiltenfingen (DE); Schmölz, Markus, 87668 Rieden (DE)
(74) Vertreter: KASTEL Patentanwälte PartG mbB

(57) **Zusammenfassung**

Um ein prozesssicheres Einfügen einer Spulenwicklung in ein Bauteil einer elektrischen Maschine im Rahmen einer Großserienproduktion zu ermöglichen, schafft die Erfindung ein Fügeverfahren zum Einfügen einer Spulenwicklung (12) in ein Bauteil (16) einer elektrischen Maschine, umfassend:
a) Bereitstellen des Bauteils (16) mit einer ringförmigen Nut-Anordnung (34) von nach innen öffnenden Nuten (14), die durch nach innen ragende Nutbegrenzungen (36) begrenzt sind,
b) Bereitstellen mit einem Spulendurchmesser, der gleich einem oder kleiner als ein Innendurchmesser der ringförmigen Nut-Anordnung (34) ist, aufgewickelten Spulenwicklung (12) innerhalb der ringförmigen Nut-Anordnung (34), wobei die Spulenwicklung (12) eine Vielzahl geradliniger Leitungsabschnitte (38), die durch dachförmige Wicklungsköpfe (40) verbunden sind, aufweist,
d) Expandieren der Spulenwicklung (12) nach außen unter Einführen der Leiterabschnitte (38) der Spulenwicklung (12) in die Nuten (14), und
e) Ausüben einer axialen Kraft (F_{A}) auf die dachförmigen Wicklungsköpfe (40) während Schritt d), um das Expandieren zu unterstützen.

## Beschreibung

Die Erfindung betrifft ein Fügeverfahren zum Einfügen einer Spulenwicklung in ein Bauteil einer elektrischen Maschine. Weiter betrifft die Erfindung eine Fügevorrichtung zum Einfügen einer Spulenwicklung in ein Bauteil einer elektrischen Maschine. Weiter betrifft die Erfindung eine Fügeanordnung mit der Fügevorrichtung, dem Bauteil und der Spulenwicklung. Weiter betrifft die Erfindung eine Steuerung für die Fügevorrichtung und ein Computerprogramm dafür.

Zum technologischen Hintergrund und zum Stand der Technik wird auf folgende Literaturstellen verwiesen:
[1] WO 2019/020148 A1
[2] WO 2020/187363 A1
[3] WO 2019/166060 A1
[4] WO 2019/166061 A1
[5] WO 2017/102892 A2
[6] DE 10 2020 130 647 A1
[7] EP 3 886 303 A1
[8] GB 1 027 777 A
[9] GB 639 069 A
[10] WO 2018/019970A1
[11] DE 10 2020 117 771 A1
[12] DE 10 2021 134 599 A1
[13] DE 10 2020 130 647 A1
[14] DE 10 2018 108 615 A1
[15] DE 10 2018 103 926 A1

Aus [1], [3], [4], [6] sind Verfahren und Vorrichtungen Herstellen einer Spulenwicklung, insbesondere Spulenpaket mit wenigstens einer

Wellenwickelmatte, sowie eine damit herstellbare Spulenwicklung bekannt, wie sie auch bei Ausführungsformen der Erfindung verwendet werden. Aus [2], [5], [7] und [10] sind Fügewerkzeuge - insbesondere Fügedorne - zum Übertragen der Spulenwicklung in ein Blechpaket eines Stators sowie Verfahren und Vorrichtungen zum Aufbringen der Spulenwicklung auf das Fügewerkzeug bekannt. Aus [5] und [10] sind darüber hinaus auch eine Vorrichtung und ein Verfahren zum Einfügen der aus Rechteckdraht gebildeten Spulenwicklung von dem Fügewerkzeug in die Nuten des Blechpakets bekannt. Dabei werden Wellenwicklungen, bei denen der Abstand zwischen geradlinigen Leiterabschnitten in Umfangsrichtung dem Nutabstand am Statorblechpaket entspricht, am Fügewerkzeug derart unter Spannung gehalten, dass ihr Durchmesser gegenüber dem entspannten Zustand geringer ist. Beim Einfügen expandieren die Wellenwicklungen wieder, so dass sie in den Statornuten nicht oder nur gering unter Spannung stehen. Weiter wird eine Gruppe geradliniger Leiterabschnitte über einen sich radial nach außen bewegenden Schieber, z.B. Expandierblech, nach außen in eine Nut am Statorblechpaket gefügt. Damit können in der Nut übereinander liegende geradlinige Leiterabschnitte überführt werden. Allerdings ist die Flächenpressung recht hoch, so dass Drahtbeschädigungen nicht immer ausgeschlossen werden können. Die Literaturstellen [1] bis [7] betreffen insbesondere Spulenwickelungen mit Rechteckdraht zum Schaffen eines hohen Füllgrades der Statornuten.

Demnach ist zur Herstellung eines Stators mit Wellenwicklung, auch Endloshairpin genannt, unter anderem die Variante bekannt, dass die gesamte Wicklung, oder ein Teil der Wicklung, auf ein Fügewerkzeug aufgebracht wird, und von diesem Fügewerkzeug, das z.B. als Fügedorn ausgeführt, in den Stator übertragen wird. Das Übertragen in den Stator kann in verschiedenen Verfahrensvarianten erfolgen.

Aus [8] und [9] sind andere Verfahren und Vorrichtungen zum Einfügen von aus Runddrähten um ein Fügewerkzeug gewickelten Wicklungen in Wicklungsnuten zwischen Polschuhen bekannt. Auch hier kann es beim Überführen der Drähte in die Wicklungsnuten zu Drahtbeschädigungen kommen.

Die Erfindung hat sich zur Aufgabe gestellt, das Einfügen einer Spulenwicklung in ein Bauteil einer elektrischen Maschine prozesssicherer zu gestalten.

Zum Lösen dieser Aufgabe schafft die Erfindung ein Fügeverfahren gemäß Anspruch 1. Eine Fügevorrichtung, eine damit versehene Fügeanordnung, eine Steuerung dafür sowie ein Computerprogramm dafür sind Gegenstand der weiteren unabhängigen Ansprüche.

Vorteilhafte Ausgestaltungen sind Gegenstand der Unteransprüche.

Die Erfindung schafft gemäß einem ersten Aspekt davon ein Fügeverfahren zum Einfügen einer Spulenwicklung in ein Bauteil einer elektrischen Maschine, umfassend:
a) Bereitstellen des Bauteils mit einer ringförmigen Nut-Anordnung von nach innen öffnenden Nuten, die durch nach innen ragende Nutbegrenzungen begrenzt sind,
b) Bereitstellen mit einem Spulendurchmesser, der gleich einem oder kleiner als ein Innendurchmesser der ringförmigen Nut-Anordnung ist, aufgewickelten Spulenwicklung innerhalb der ringförmigen Nut-Anordnung, wobei die Spulenwicklung eine Vielzahl geradliniger Leitungsabschnitte, die durch dachförmige Wicklungsköpfe verbunden sind, aufweist,
d) Expandieren der Spulenwicklung nach außen unter Einführen der Leiterabschnitte der Spulenwicklung in die Nuten, und
e) Ausüben einer axialen Kraft auf die dachförmigen Wicklungsköpfe während Schritt d), um das Expandieren zu unterstützen.

Vorzugsweise umfasst Schritt a) den Schritt:
a1) Bereitstellen eines ringförmigen Grundkörpers eines Stators.

Vorzugsweise umfasst Schritt a) den Schritt:
a2) Bereitstellen eines Blechpakets eines Stators.

Vorzugsweise umfasst Schritt a) den Schritt:
a3) Bereitstellen des Bauteils mit Isolationspapieren in den einzelnen Nuten.

Vorzugsweise umfasst Schritt a) den Schritt:
a1) Bereitstellen eines ringförmigen Grundkörpers eines Stators.

Vorzugsweise umfasst Schritt a) den Schritt:
a2) Bereitstellen eines Blechpakets eines Stators.

Vorzugsweise umfasst Schritt a) den Schritt:
a3) Bereitstellen des Bauteils mit Isolationspapieren in den einzelnen Nuten.

Vorzugsweise umfasst Schritt b) den Schritt:
b1) Bereitstellen einer aus einzelnen Wellenwicklungsdrähten gebildeten Spulenmatte zum Bilden der Spulenwicklung.

Vorzugsweise umfasst Schritt b) den Schritt:
b2) Bereitstellen der Spulenwicklung aus Drähten mit rechteckigem Drahtquerschnitt.

Vorzugsweise umfasst Schritt b) den Schritt:
b3) Bereitstellen der Spulenwicklung aus Drähten mit Isolierschicht.

Vorzugsweise umfasst Schritt b) den Schritt:
b4) Bereitstellen der Spulenwicklung auf einem Fügewerkzeug, das in den Innenraum innerhalb des Bauteils mit der ringförmigen Nut-Anordnung von nach innen offenen Nuten eingefügt wird.

Vorzugsweise umfasst Schritt b) den Schritt:
b5) Komprimieren der Spulenmatte mit geringerem Durchmesser auf einem Fügedorn als Fügewerkzeug.

Vorzugsweise umfasst Schritt b) den Schritt:
b6) Bereitstellen der Spulenmatte derart, dass die geradlinigen Leiterabschnitte in Fügewerkzeugnuten zwischen radial beweglichen Führungselementen eingefügt sind.

Vorzugsweise umfasst das Fügeverfahren den vor Schritt d) durchzuführenden Schritt:
c) Bereitstellen von Stützfingern axial neben den Nutbegrenzungen.

Vorzugsweise umfasst Schritt c) den Schritt:
c1) Bereitstellen je eines Stützfingers pro Nutbegrenzung des Bauteils.

Vorzugsweise umfasst Schritt c) den Schritt:
c2) Bereitstellen von keilförmigen Stützfingern, die von radial außen nach radial innen gesehen verjüngt ausgebildet sind.

Vorzugsweise umfasst Schritt c) den Schritt:
c3) Bereitstellen der Stützfinger mit einer ersten und einer zweiten Seitenfläche, die im Wesentlichen in axialer und radialer Richtung verlaufen und sich von radial außen nach radial innen gesehen einander annähern.

Vorzugsweise umfasst Schritt c) den Schritt:
c4) Bereitstellen von Stützfingern (28) in einer Grundstellung (66) derart, dass sie jeweils eine in die axiale Richtung weisende Endfläche einer der Nutbegrenzung en (36) vollständig überdecken.

Vorzugsweise umfasst Schritt c) den Schritt:
c5) Bereitstellen von Stützfingern in einer Grundstellung derart, dass Seitenflächen der Stützfinger, die im Wesentlichen in axialer und radialer Richtung verlaufen, mindestens mit zur Mitte der Nut hin weisenden Nutseiten fluchten oder in Umfangsrichtung über Kanten der Nutbegrenzungen und/oder über die zur Mitte der Nut hin weisenden Nutseiten hinweg zur Mitte der jeweils begrenzten Nut hin vorstehen.

Vorzugsweise umfasst Schritt c) den Schritt:
c6) Bereitstellen von Stützfingern mit abgerundeten oder an Eckkanten abgeflachten im Wesentlichen in Axialrichtung weisenden Oberseiten.

Vorzugsweise umfasst Schritt c) den Schritt:
c7) Bereitstellen einer ringförmigen Anordnung von Stützfingern an einem Stützfingerbewegungsmechanismus zur radialen Bewegung der Stützfinger.

Bei einer bevorzugten Verfahrensweise werden die Stützfinger mittels des Stützbewegungsmechanismus in Schritt c) zugestellt und verbleiben während der Durchführung der Schritte d) und e) an Position, werden also mit anderen Worten während des Einfügens der Spulenwicklung nicht bewegt.

Bei anderen Ausführungsformen des Fügeverfahrens wird noch eine zusätzliche Bewegung der Stützfinger beim Durchführen der Schritte d) und e) durchgeführt. Demnach umfassen einige Ausführungsformen des Fügeverfahrens den Schritt:
f) Mitbewegen der Stützfinger radial mit der Spulenwicklung, um Leiterabschnitte und/oder Wicklungsköpfe beim Einfügen zu führen.

Vorzugsweise umfasst Schritt f) die folgende Reihenfolge von Schritten:
f1) Mitbewegen der Stützfinger mit der Spulenwicklung aus einer Grundstellung über eine Teilstrecke bis zu einer radialen Zwischenposition zwischen der radial nach innen offenen Mündung und dem radial außen liegenden Nutgrund der zugeordneten Nut;
f2) Zurückführen der Stützfinger aus der Zwischenposition in die Grundstellung oder in eine weitere, der Grundstellung näher liegende Zwischenposition; und
f3) Wiederholen der Schritte e1) und e2).

Vorzugsweise werden die Schritte f1) und f2) derart durchgeführt, dass in der Grundstellung Leiter der Spulenwicklung an Seitenflächen der Stützfinger, die im Wesentlichen in axialer und radialer Richtung verlaufen, anliegen und in der Zwischenposition die Leiter immer noch an den Seitenfläche anliegen oder an zur Nutmitte hin weisenden Nutwänden anliegen und beim Zurückführen der Stützfinger an deren Seitenflächen in Umfangsrichtung gedrängt werden.

5. Fügeverfahren nach einem der voranstehenden Ansprüche, dadurch gekennzeichnet,
dass Schritt d) wenigstens einen oder mehrere der folgenden Schritte umfasst:

Vorzugsweise umfasst Schritt d) den Schritt:
d1) Auferlegen einer radial nach außen gerichteten Kraft auf Leiter der Spulenwicklung, um diese radial nach außen zu expandieren und in die Nuten einzufügen.

Vorzugsweise umfasst Schritt d) den Schritt:
d2) Auferlegen einer radial gerichteten Kraft auf Wellenwicklungsköpfe der Spulenwicklung.

Vorzugsweise umfasst Schritt d) den Schritt:
d3) Einschieben der geradlinigen Leiterabschnitte zum Füllen jeder Nut mit mehreren Lagen Leiterabschnitten.

Vorzugsweise umfasst Schritt d) den Schritt:
d4) Bewegen der geradlinigen Leiterabschnitte innerhalb der Nut radial nach außen.

Vorzugsweise umfasst Schritt e) den Schritt:
e1) Ausüben einer axial zur Mitte des Bauteils hin gerichteten Kraft auf eine Spitze eines Wellenwicklungskopfes, der zwei in Nuten des Bauteils einzufügende und/oder in den Nuten radial nach außen zu bewegende geradlinige Leiterabschnitte verbindet, um die Leiterabschnitte in Umfangsrichtung voneinander weg zu drängen.

Vorzugsweise umfasst Schritt d) den Schritt:
e2) Ausüben der axial gerichteten Kraft mittels Krafteinleitungselementen, die axial und radial verschiebbar sind.

Vorzugsweise umfasst Schritt d) den Schritt:
e3) Mitbewegen eines Krafteinleitungselements, das axial Kraft auf wenigstens einen Wellenwicklungskopf ausübt, in radialer Richtung zusammen mit dem Wellenwicklungskopf.

Vorzugsweise umfasst Schritt d) den Schritt:
e4) Ausüben der axial gerichteten Kraft in Abhängigkeit von dem Maß des Expandierens.

Vorzugsweise umfasst Schritt d) den Schritt:
e5) Ausüben von axial entgegengerichtet zueinander wirkenden Kräften auf Wellenwicklungsköpfe auf beiden axialen Seiten des Bauteils.

Vorzugsweise umfasst Schritt d) den Schritt:
e6) Einleiten der axialen Kraft nur partiell an ausgewählten Stellen.

Vorzugsweise umfasst Schritt d) den Schritt:
e7) Einleiten einer relativ zu der an anderen Bereichen der Spulenwicklung auferlegten axialen Kraft reduzierten axialen Kraft im Bereich von Anschlussleitungen der Spulenwicklung.

Vorzugsweise umfasst Schritt d) den Schritt:
e8) Einleiten der axialen Kraft mittels eines elastischen Krafteinleitungselement, das sich an den Wicklungskopf anpassen kann.

Vorzugsweise umfasst Schritt d) den Schritt:
e9) Einleiten der axialen Kraft mittels in radialer Richtung beim Einleiten statisch angeordneter Krafteinleitungselemente, die wechselweise andrücken und entspannen, um die radiale relative Bewegung der Spulenwicklungen zu erleichtern.

Gemäß einem weiteren Aspekt schafft die Erfindung eine Fügevorrichtung zum Einfügen einer Spulenwicklung in ein Bauteil einer elektrischen Maschine, umfassend:
eine Halterung für das Bauteil, das mit einer ringförmigen Nut-Anordnung von nach innen öffnenden Nuten, die durch nach innen ragende Nutbegrenzungen begrenzt sind, versehen ist;
eine Fügeeinrichtung mit einem Fügewerkzeug, das zum Anordnen der mit einem Spulendurchmesser, der gleich einem oder kleiner als ein Innendurchmesser der ringförmigen Nut-Anordnung ist, aufgewickelten Spulenwicklung, die eine Vielzahl geradliniger Leitungsabschnitte, die durch dachförmige Wicklungsköpfe verbunden sind, innerhalb der ringförmigen Nut-Anordnung ausgebildet ist, wobei die Fügeeinrichtung zum Expandieren der Spulenwicklung nach außen unter Einführen der Leiterabschnitte der Spulenwicklung in die Nuten ausgebildet ist, und eine Axialkrafteinleiteinrichtung die dazu eingerichtet ist, eine axiale Kraft auf die dachförmigen Wicklungsköpfe während des Expandierens und Einfügens der Spulenwicklung auszuüben, um das Expandieren zu unterstützen.

Vorzugsweise weist die Fügevorrichtung eine Stützfinger-Anordnung von radial beweglichen Stützfingern axial neben den Nutbegrenzungen auf.

Vorzugsweise weist die Fügevorrichtung weiter einen Stützfingerbewegungsmechanismus zum radialen Bewegen der Stützfinger auf.

Es ist bevorzugt, dass die Stützfinger-Anordnung je einen Stützfinger pro Nutbegrenzung des Bauteils aufweist.

Es ist bevorzugt, dass die Stützfinger-Anordnung keilförmige Stützfinger aufweist, die von radial außen nach radial innen gesehen verjüngt ausgebildet sind.

Es ist bevorzugt, dass die Stützfinger-Anordnung Stützfinger mit einer ersten und einer zweiten Seitenfläche, die im Wesentlichen in axialer und radialer Richtung verlaufen und sich von radial außen nach radial innen gesehen einander annähern, aufweist.

Es ist bevorzugt, dass die Stützfinger-Anordnung zum Zustellen der Stützfinger in einer Grundstellung derart ausgebildet ist, dass die Stützfinger jeweils eine in die axiale Richtung weisende Endfläche der jeweiligen Nutbegrenzungen vollständig überdecken.

Es ist bevorzugt, dass die Stützfinger-Anordnung zum Zustellen der Stützfinger in einer Grundstellung derart ausgebildet ist, dass Seitenflächen der Stützfinger, die im Wesentlichen in axialer und radialer Richtung verlaufen, mindestens mit zur Mitte der Nut hin weisenden Nutseiten fluchten oder in Umfangsrichtung über Kanten der Nutbegrenzungen und/oder über die zur Mitte der Nut hin weisenden Nutseiten hinweg zur Mitte der jeweils begrenzten Nut hin vorstehen.

Es ist bevorzugt, dass die Stützfinger-Anordnung Stützfinger mit abgerundeten oder an Eckkanten abgeflachten im Wesentlichen in Axialrichtung weisenden Oberseiten aufweisen.

Vorzugsweise weist die Fügevorrichtung eine Steuerung auf, die dazu ausgebildet ist, die Axialkrafteinleitungseinrichtung abhängig von der Expansionsbewegung, die durch die Spulenwicklung mittels der Fügeeinrichtung durchgeführt wird, zu steuern.

Bei einer derzeit bevorzugten Ausgestaltung mit der Stützfinger-Anordnung ist die Steuerung vorzugsweise dazu ausgebildet, den
Stützfingerbewegungsmechanismus dazu anzusteuern, die Stützfinger vor dem Expandieren der Spulenwicklung und Einfügen der Leiterabschnitte in die Nuten radial zuzustellen und dort während des Einfügens an Position zu halten.

Bei anderen Ausführungsformen der Fügevorrichtung ist die Steuerung dazu ausgebildet, den Stützfingerbewegungsmechanismus abhängig von der Expansionsbewegung durch die Spulenwicklung mittels der Fügeeinrichtung derart zu steuern, dass sich die Stützfinger radial mit der Spulenwicklung mitbewegen, um Leiterabschnitte und/oder Wicklungsköpfe beim Einfügen zu führen.

Bei einigen Ausführungsformen ist die Steuerung dazu ausgebildet, den Stützfingerbewegungsmechanismus anzusteuern zum
f1) Mitbewegen der Stützfinger mit der mittels der Fügeeinrichtung expandierten Spulenwicklung aus einer Grundstellung über eine Teilstrecke der radialen Expansionsbewegung bis zu einer Zwischenposition,
f2) Zurückführen der Stützfinger aus der Zwischenposition in die Grundstellung oder in eine weitere, der Grundstellung näher liegende Zwischenposition und
f3) Wiederholen der Schritte e1) und e2).

Bei einigen Ausführungsformen ist die Steuerung dazu ausgebildet, den Stützfingerbewegungsmechanismus derart anzusteuern, dass in der Grundstellung Leiter der Spulenwicklung an Seitenflächen der Stützfinger, die im Wesentlichen in axialer und radialer Richtung verlaufen, anliegen und in der Zwischenposition die Leiter immer noch an den Seitenfläche anliegen oder an zur Nutmitte hin weisenden Nutwänden anliegen und beim Zurückführen der Stützfinger an deren Seitenflächen in Umfangsrichtung gedrängt werden.

Es ist bevorzugt, dass die Axialkrafteinleiteinrichtung dazu eingerichtet ist, eine axial zur Mitte des Bauteils hin gerichtete Kraft auf eine Spitze eines Wellenwicklungskopfes, der zwei in Nuten des Bauteils einzufügende und/oder in den Nuten radial nach außen zu bewegende geradlinige Leiterabschnitte verbindet, auszuüben, um die Leiterabschnitte in Umfangsrichtung voneinander weg zu drängen.

Es ist bevorzugt, dass die Axialkrafteinleiteinrichtung Krafteinleitungselemente aufweist, die axial und radial verschiebbar sind.

Es ist bevorzugt, dass die Axialkrafteinleiteinrichtung wenigstens ein Krafteinleitungselement aufweist, das dazu ausgebildet ist, sich in radialer Richtung zusammen mit dem Wellenwicklungskopf, auf den es die axiale Kraft ausübt, mitzubewegen.

Es ist bevorzugt, dass die Axialkrafteinleiteinrichtung Krafteinleitungselemente zum Ausüben von axial entgegengerichtet zueinander wirkenden Kräften auf Wellenwicklungsköpfe auf beiden axialen Seiten des Bauteils aufweist.

Es ist bevorzugt, dass die Axialkrafteinleiteinrichtung dazu eingerichtet ist, die axiale Kraft nur partiell an ausgewählten Stellen einzuleiten.

Es ist bevorzugt, dass die Axialkrafteinleiteinrichtung dazu eingerichtet ist, einer relativ zu der an anderen Bereichen der Spulenwicklung auferlegten axialen Kraft reduzierten axialen Kraft im Bereich von Anschlussleitungen der Spulenwicklung einzuleiten.

Es ist bevorzugt, dass die Axialkrafteinleiteinrichtung wenigstens ein elastisches Krafteinleitungselement aufweist, das sich an den zu drückenden Wicklungskopf anpassen kann.

Es ist bevorzugt, dass die Axialkrafteinleiteinrichtung beim Einleiten der axialen Kraft radial statisch angeordnete Krafteinleitungselemente aufweist, die dazu eingerichtet sind, wechselweise anzudrücken und zu entspannen, um die radiale relative Bewegung der Spulenwicklungen zu erleichtern.

Gemäß einem weiteren Aspekt schafft die Erfindung eine Fügeanordnung umfassend eine Fügevorrichtung nach einer der voranstehenden Ausgestaltungen, das Bauteil mit der ringförmigen Nut-Anordnung nach innen öffnender Nuten und die in das Bauteil mittels der Fügevorrichtung einzufügende Spulenwicklung.

Vorzugsweise ist das Bauteil ein ringförmiger Grundkörper eines Stators. Vorzugsweise ist das Bauteil ein Blechpaket eines Stators. Vorzugsweise weist das Bauteil Isolationspapiere in den einzelnen Nuten auf. Vorzugsweise weist die Spulenwicklung eine aus einzelnen Wellenwicklungsdrähten gebildete Spulenmatte auf. Vorzugsweise weist die Spulenwicklung eine Spulenmatte aus Drähten mit rechteckigem Drahtquerschnitt auf. Vorzugsweise weist die Spulenwicklung eine Spulenmatte aus Drähten mit Isolierschicht auf.

Gemäß einem weiteren Aspekt schafft die Erfindung eine Steuerung für eine Fügevorrichtung oder eine Fügeanordnung nach einer voranstehenden Ausgestaltungen, wobei die Steuerung dazu eingerichtet ist, die Fügevorrichtung zum Durchführen des Fügeverfahrens nach einer der oben beschriebenen Ausgestaltungen anzusteuern.

Gemäß einem weiteren Aspekt schafft die Erfindung ein Computerprogramm, umfassend Anweisungen, die die Fügevorrichtung nach einer der voranstehenden Ausgestaltungen oder die Fügevorrichtung der Fügeanordnung nach einer der voranstehenden Ausgestaltungen dazu veranlassen, das Fügeverfahren nach einer oben beschriebenen Ausgestaltungen durchzuführen.

Bevorzugte Ausführungsformen der Erfindung betreffen eine Ablaufstrategie zur Reduzierung der Expandierkraft beim Einfügen von Spulenwicklungen in eine E-Maschinenbauteil wie insbesondere einen Stator oder Rotor.
- Fig. 1: eine Fügeanordnung mit einer Fügevorrichtung, einem Bauteil und einer Spulenwicklung, wobei die auf ein Fügewerkzeug der Fügevorrichtung aufgewickelte Spulenwicklung und das Bauteil nebeneinander dargestellt sind;
- Fig. 2: die Fügeanordnung von Fig. 1, wobei das Fügewerkzeug mit komprimierter Spulenwicklung in das Bauteil eingefügt ist;
- Fig. 3: einen Schnitt durch einen Umfangsteilbereich der Fügeanordnung;
- Fig. 4: eine perspektivische Ansicht des Umfangsteilbereichs der Fügeanordnung von Fig. 1 zur Verdeutlichung des Fügevorgangs, wobei zu Darstellungszwecken nur einige der einzuführenden Drähte der Spulenwicklung gezeigt sind;
- Fig. 5: eine Draufsicht auf den Umfangsteilbereich von Fig. 4 mit Verdeutlichung der auf die Spulenwicklung auferlegten Expandierkräfte;
- Fig. 6: eine Darstellung wie in Fig. 4, wobei zusätzlich als weitere Teile der Fügevorrichtung eine Stützfinger-Anordnung von radial beweglichen Stützfingern, eine Axialkrafteinleiteinrichtung, ein Stützfingerbewegungsmechanismus zum radialen Bewegen der Stützfinger und eine Steuerung angedeutet sind;
- Fig. 7: eine Ansicht auf einen Bereich eines als Wellenwicklungsdraht ausgebildeten Leiters der Spulenwicklung zur Verdeutlichung der Wirkung einer Axialkraft auf einen Wicklungskopf desselben;
- Fig. 8: eine Seitenansicht der Fügeanordnung aus Fügevorrichtung, Bauteil und Spulenwicklung mit Andeutung der Axialkrafteinleiteinrichtung;
- Fig. 9: die Seitenansicht der Fügeanordnung von Fig. 8 mit einer ersten Ausführungsform der Axialkrafteinleiteinrichtung;
- Fig. 10: eine Seitenansicht in einer in Axialrichtung und Radialrichtung verlaufenden Schnittebene auf in Axialrichtung und Radialrichtung bewegliche Krafteinleitungselemente einer zweiten Ausführungsform der Axialkrafteinleiteinrichtung;
- Fig. 11: eine axiale Unteransicht in Richtung des Pfeils XI von Fig. 10 gesehen auf einen Umfangsteilbereich der zweiten Ausführungsform der Axialkrafteinleiteinrichtung, wobei ein Teil der Krafteinleitungselemente dargestellt ist;
- Fig. 12: eine schematische stark vereinfachte axiale Draufsicht auf eine Fügeanordnung aus Bauteil, Fügevorrichtung und Spulenwicklung mit einer weiteren Ausführungsform der Fügevorrichtung bei einem ersten Schritt eines Expansionsvorganges;
- Fig. 13: eine Ansicht wie in Fig. 12 bei einem nachfolgenden zweiten Schritt des Expansionsvorganges;
- Fig. 14: eine Ansicht wie in Fig. 12 und 13 bei einem nachfolgenden dritten Schritt des Expansionsvorganges; und
- Fig. 15: eine Ansicht wie in Fig. 12 bis 14 bei einem nachfolgenden vierten Schritt des Expansionsvorganges.
Im Folgenden werden Ausführungsbeispiele für ein Fügeverfahren und eine Fügevorrichtung 10 zum Einbringen einer Spulenwicklung 12, insbesondere in Form einer Wellenwicklung, in Nuten 14 eines Bauteils 16 einer elektrischen Maschine, wie z.B. eines Blechpakets 18 eines Stators 20, näher beschrieben.

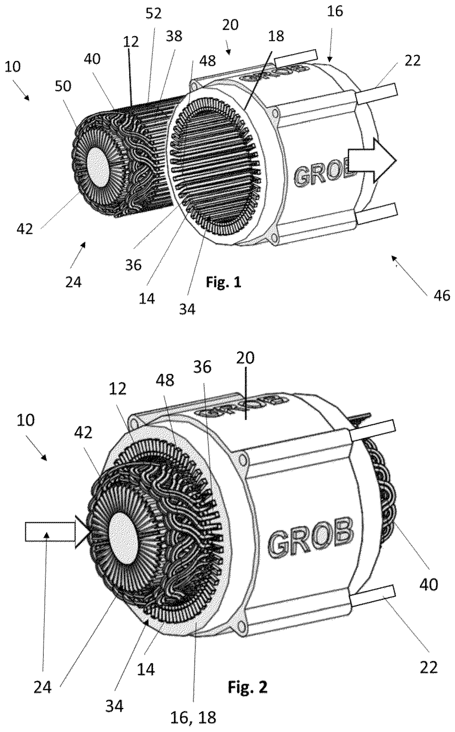

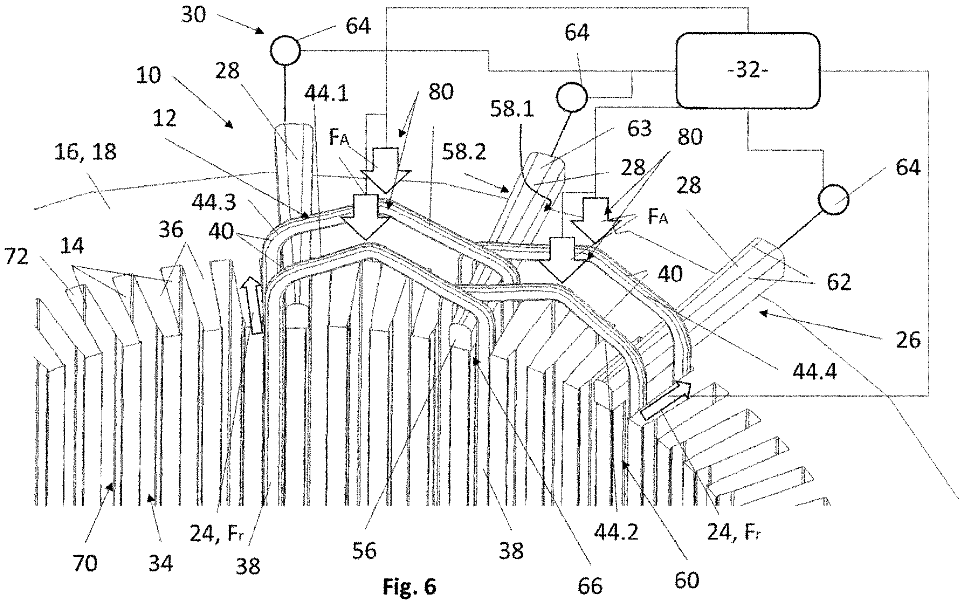

Wie aus den Fig. 1 bis 6 ersichtlich, ist die Fügevorrichtung 10 zum Einfügen einer Spulenwicklung 12 in ein Bauteil 16 einer elektrischen Maschine ausgebildet und weist eine Halterung 22 und eine Fügeeinrichtung 24 auf. Weiter weist die Fügevorrichtung eine in Fig. 6 angedeutete Axialkrafteinleiteinrichtung 80 auf. Bei einigen Ausführungsformen weist die Fügevorrichtung 10 weiter noch eine in Fig. 6 angedeutete Steuerung 32 auf. Bei einigen Ausführungsformen weist die Fügevorrichtung 10 weiter eine Stützfinger-Anordnung 26 mit Stützfingern 28 und einen Stützfingerbewegungsmechanismus 30 auf.

Das Bauteil 16 ist mit einer ringförmigen Nut-Anordnung 34 von nach innen öffnenden Nuten 14, die durch nach innen ragende Nutbegrenzungen 36 begrenzt sind, versehen.

Die Spulenwicklung 12 weist eine Vielzahl geradliniger Leitungsabschnitte 38 auf, die durch Wicklungsköpfe 40 verbunden sind.

Die Fügeeinrichtung 24 weist ein Fügewerkzeug 42 auf. Das Fügewerkzeug 42 ist dazu ausgebildet, die Spulenwicklung 12 innerhalb der ringförmigen Nut-Anordnung 34 anzuordnen. Die Spulenwicklung 12 ist hierzu mit einem kleineren Spulendurchmesser, der gleich oder kleiner als der Innendurchmesser der Nut-Anordnung 34, also hier insbesondere gleich oder vorzugsweise kleiner als der Innendurchmesser des Blechpakets 18, ist, auf das Fügewerkzeug 42 aufgewickelt. Weiter ist das Fügewerkzeug 42 dazu ausgebildet, die so eingebrachte Spulenwicklung 12 nach außen zu expandieren, wobei die geradlinigen Leiterabschnitte 38 der Spulenwicklung 12 in die Nuten 14 eingefügt werden.

Die Stützfinger 28 der Stützfinger-Anordnung 26 sind radial beweglich und axial neben den Nutbegrenzungen 36 angeordnet. Der Stützfingerbewegungsmechanismus 30 ist zum radialen Bewegen der Stützfinger 28 ausgebildet.

Die Axialkrafteinleiteinrichtung 80 ist dazu eingerichtet, eine axiale Kraft auf die dachförmigen Wicklungsköpfe 40 während des Expandierens und Einfügens der Spulenwicklung 12 auszuüben, um das Expandieren zu unterstützen.

Das Fügeverfahren dient zum Einfügen der Spulenwicklung 12 in das Bauteil 16 einer elektrischen Maschine, und umfasst die Schritte:
a) Bereitstellen des Bauteils 16 mit der ringförmigen Nut-Anordnung 34 von nach innen öffnenden Nuten 14, die durch nach innen ragende Nutbegrenzungen 36 begrenzt sind,
b) Bereitstellen der mit dem Spulendurchmesser, der gleich dem oder kleiner als der Innendurchmesser der ringförmigen Nut-Anordnung 34 ist, aufgewickelten Spulenwicklung 12 innerhalb der ringförmigen Nut-Anordnung 34,
d) Expandieren der Spulenwicklung 12 nach außen unter Einführen der Leiterabschnitte 38 der Spulenwicklung in die Nuten 14, und
e) Ausüben einer axialen Kraft auf die dachförmigen Wicklungsköpfe 40 während Schritt d), um das Expandieren zu unterstützen.

Bei einigen Ausführungsformen umfasst das Fügeverfahren noch den zusätzlichen Schritt:
c) Bereitstellen der radial beweglichen Stützfingern 28 axial neben den Nutbegrenzungen 36.

Die Steuerung 32 ist insbesondere dazu ausgebildet, die Fügevorrichtung 10 zum Durchführen des Fügeverfahrens anzusteuern. Die Steuerung 32 ist hierzu als elektronische Steuerung mit einer Recheneinheit mit entsprechendem Computerprogramm ausgebildet.

Wie man insbesondere Fig. 1 bis 7 entnehmen kann, umfasst die als Wellenwicklung ausgebildete Spulenwicklung 12 vorher wellenförmig oder mäanderförmig gebogene und mit einer Isolatorschicht versehene Leiter 44.1, 44.2, 44.3, 44.4, wie insbesondere Drähte, die die geradlinige Leiterabschnitte 38 und etwa dachförmige Biegungsabschnitte - sogenannte Wicklungsköpfe 40 - dazwischen aufweisen. Die Spulenwicklung 12 liegt zum Beispiel als Wellenwickelmatte vor, wie sie in [1], [3], [4] oder [6] beschrieben und gezeigt wird. Es wird für nähere Einzelheiten für die Wicklung ausdrücklich auf diese Literaturstellen verwiesen.

Wie in Fig. 1 bis 3 gezeigt, wird die Spulenwicklung 12 zunächst, wie dies in [2], [5], [10] oder [7] beschrieben und gezeigt ist, auf die Fügeeinrichtung 24 zum Übertragen der Wicklung in das Blechpaket 14 aufgebracht. Es wird für nähere Einzelheiten bezüglich des allgemeinen Aufbaus der Fügeeinrichtung 24 und eines als Fügewerkzeug 42 (auch Fügedorn genannt) ausgebildeten Wicklungsträger desselben ausdrücklich auf diese Literaturstellen [2], [5] und insbesondere [10] verwiesen. Dabei werden Wellenwicklungen, bei denen der Abstand zwischen geradlinigen Leiterabschnitten 38 in Umfangsrichtung dem Nutabstand am Blechpaket 18 entspricht, am Fügewerkzeug 42 derart unter Spannung gehalten, dass ihr Spulendurchmesser gegenüber dem entspannten Zustand geringer ist. Beim Einfügen expandieren die Wellenwicklungen wieder, so dass sie in den Nuten 14 nicht oder nur gering unter Spannung stehen.

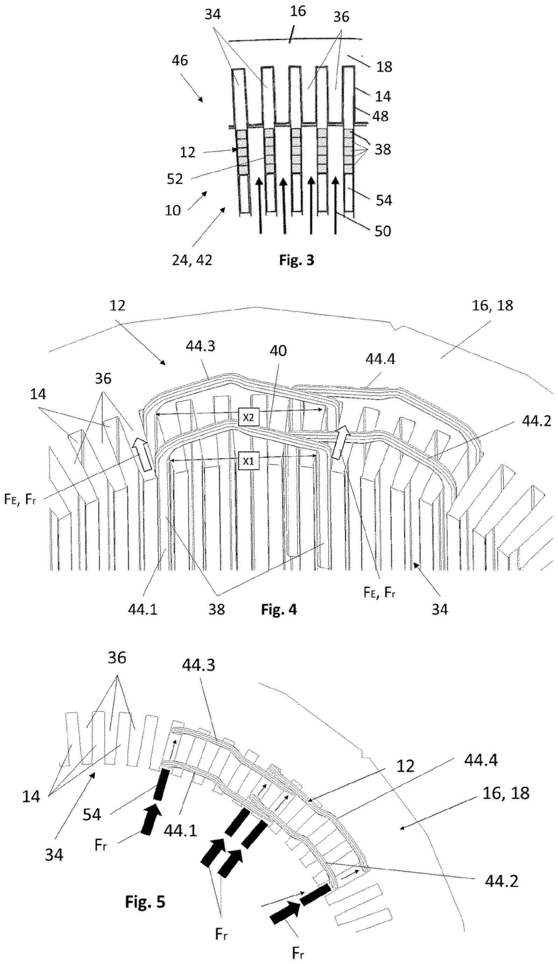

Fig. 1 zeigt eine Anordnung aus Fügevorrichtung 10, Bauteil 16 und Spulenwicklung 12, die im Folgenden als Fügeanordnung 46 bezeichnet wird. Insbesondere zeigt Fig. 1 das Fügewerkzeug 42 und das Blechpaket 18 nebeneinander angeordnet. Fig. 2 zeigt einen Verbund dieser Teile, wobei das Fügewerkzeug 42 in das Blechpaket 18 eingefügt ist. Fig. 3 zeigt einen Schnitt durch einen Teilbereich eines Umfangs des Verbunds aus Blechpaket 18 mit darin eingefügtem und ausgerichteten Fügewerkzeug 42.

Das Bauteil 16 ist ringförmig ausgebildet und weist die Nut-Anordnung 34 aus den nach innen offener Nuten 14 mit Nutbegrenzungen 36 dazwischen auf. Bei den gezeigten Ausführungsbeispielen ist das Bauteil 16 als Blechpaket 18 zum Bilden eines Stators 20 ausgebildet. Bei den dargestellten Ausführungsformen sind die Nuten 14 des Blechpakets 18 jeweils mit einer Nutisolierung in Form eines Isolationspapiers 48 isoliert.

Das Fügewerkzeug 42 weist eine Anordnung von um eine zentrale Achse herum verteilt angeordneten Leitblechen 50 auf, die Werkzeugnuten 52 begrenzen, in denen die geradlinigen Leiterabschnitte 38 der Spulenwicklung 12 aufnehmbar sind. Die Leitbleche 50 dienen als Führungselemente zur Führung der Leiterabschnitte 38 beim Überführen.

Zum Einbringen werden die geradlinigen Leiterabschnitte 38 beispielsweise mittels radial nach außen bewegter Schieber 54 des Fügewerkzeugs 42 in die Nuten 16 eingeschoben. Dabei wird die Spulenwicklung 12 von dem kleineren Durchmesser, mit der sie komprimiert auf dem Fügewerkzeug aufliegt, auf den größeren Durchmesser, mit der sie im Betrieb in dem Bauteil 16 eingesetzt ist, expandiert.

Fig. 4 und 5 zeigen den Expansionsvorgang. Beim Einführen der einzelnen Leiter 44.1-44.4 wird der Abstand X1 zwischen den geradlinigen Leiterabschnitten 38, die jeweils durch einen gemeinsamen Wicklungskopf 40 miteinander verbunden sind, auf den Abstand X2 vergrößert. Dabei werden die Leiter 44.1-44.4 mittels Expandierelementen, insbesondere den Schiebern 54, mit einer Expandierkraft F_{E} beaufschlagt.

Kurz zusammengefasst werden bei der Statorherstellung mit dem Verfahren "Wellenwicklung" die Drahtspulen in den Innendurchmesser des Blechpaketes 18 gefügt und anschließend nach außen hin expandiert.

Bei dieser Expansion werden die Leiter 44.1-44.4 um einen bestimmten Betrag geweitet (X1 zu X2). Hierbei muss eine Verformungsenergie aufgewendet werden. Zudem muss verhindert werden, dass die Leiter 44.1 - 44.4 oder die Isolationspapiere 18 beschädigt werden. Insbesondere soll die Isolationsschicht der Leiter 44.1-44.4 auch bei in schneller Taktfolge durchgeführter Herstellung unversehrt bleiben.

Wie man Fig. 4 und 5 entnehmen kann, weiten die beispielsweise als Schieber 54 ausgebildeten Expandierelemente hierbei die Drähte, Leiter 44.1-44.4, Spulen oder Spulenwicklungen 12 radial nach außen. Die Expandierelemente leiten hierzu jeweils eine radiale Kraft Fᵣ ein und wirken rein radial. Die Kräfte Fᵣ greifen lediglich an den innen liegenden Drähten an.

Beim Expanieren der Leiter 44.1-44.4 wird sehr viel Kraft aufgrund der nötigen Leiterverformung benötigt. Zudem entsteht viel Reibung zwischen den Leitern 44.1-44.4 (Drähten / Spulen), zwischen den Leitern 44.1-44.4 und den optionalen Stützfingern 28 und zwischen den Leitern 44.1-44.4 und den Isolationspapieren 48 bzw. dem Blechpaket (Stator).

Bei den Fügeverfahren des Stands der Technik wird die gesamte notwenige Kraft rein radial eingeleitet - es wirkt nur die radiale Kraft Fᵣ. Dadurch drücken die äußeren Lagen von Drähten mit so hoher Kraft auf die innenliegenden, dass Beschädigungen zwischen den Drähten entstehen können ("Draht zu Draht"-Beschädigung). Diese Beschädigungen können zu einem Ausfall des Stators 20 führen. An den Berührpunkten zwischen Expandierelementen - Schieber 54 - und Drähten - Leiter 44.1-44.4 - entstehen zusätzlich große Belastungen und unter Umständen Beschädigungen.

Bei den Fügeverfahren und den Fügevorrichtungen 10 gemäß den hier dargestellten Ausführungsformen wird die einleitende Expandierkraft F_{E} aufgeteilt, um so eine Möglichkeit zu schaffen, die Kraft Fᵣ an den Expandierelementen - bspw. Schieber 54 - zu reduzieren.

Zudem kann so die Expandierkraft auch an den weiter außen liegenden Wicklungen / Drähten angreifen.

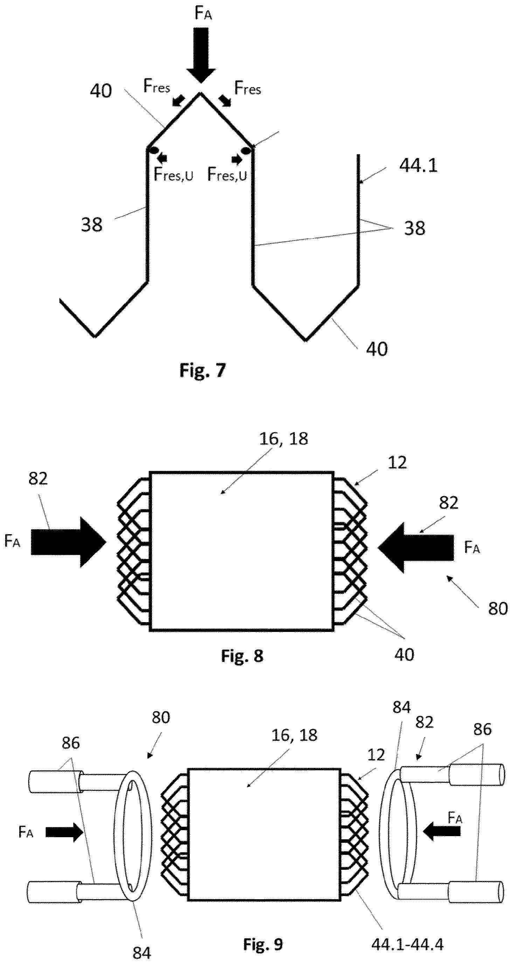

Hierbei wird eine zusätzliche Kraft F_{A} in axialer Richtung eingebracht. Dabei wirkt ein Grundprinzip, wie es im Folgenden anhand der Fig. 6 und 7 erläutert ist. Mittels der Axialkrafteinleiteinrichtung 80 wird die zusätzliche Kraft F_{A} in axialer Richtung zusätzlich zu der durch die Schieber 54 auferlegten radialen Kraft Fᵣ aufgebracht.

Wie in Fig. 7 dargestellt, wird die axiale Kraft F_{A} auf den Wickelkopf 40 ausgeübt. Der Wickelkopf 40 mit seinen schräg verlaufenden Leiterabschnitten wird beispielsweise auf den Stützfingern 28 abgestützt. Es entsteht aufgrund der axialen Kraft eine resultierenden Kraft Fᵣₑₛ mit axialen und in Umfangsrichtung gerichteten Kraftkomponenten und somit eine resultierenden Kraft Fᵣₑₛ, u in Umfangsrichtung. Diese in Umfangsrichtung gerichtete resultierende Kraft Fᵣₑₛ, u wirkt zum Aufweiten der Spulenwicklung 12.

Wie Fig. 7 zeigt wird somit eine axial zur Mitte des Bauteils 16 hin gerichteten Kraft F_{A} auf eine Spitze eines Wellenwicklungskopfes 40 ausgeübt, der zwei in Nuten 14 des Bauteils 16 einzufügende und/oder in den Nuten 14 radial nach außen zu bewegende geradlinige Leiterabschnitte 38 verbindet, um die Leiterabschnitte 38 in Umfangsrichtung voneinander weg zu drängen.

Bei bevorzugten Ausführungsformen werden, wie dies in Fig. 6 und 7 dargestellt ist, die Stützfinger 28 zum Expandieren zugestellt. Diese Stützfinger 28 bilden eine definierte Biegekante und dienen zur Führung, um die Leiter 44.1-44.4, das Isolationspapier 48 und das Blechpaket 18 zu schützen.

Aus Übersichtsgründen sind in den Fig. 4 bis 6 nur vier der Leiter 44.1-44.4 und auch nur drei Stützfinger 28 dargestellt. Wie sich aus Fig. 1 bis 3 ergibt, sind in der Praxis weitaus mehr Leiter, wie insbesondere Drähte, einzuführen, und dementsprechend werden in der Praxis auch mehr Stützfinger 28 eingesetzt. Insbesondere weist die Stützfinger-Anordnung 26 pro Nutbegrenzung 36 einen Stützfinger 28 auf.

Bei einigen Ausführungsformen sind die Stützfinger 28 keilförmig und von radial außen nach radial innen gesehen verjüngt ausgebildet. Insbesondere weisen die Stützfinger 28 ein radial inneres Ende 56 mit einem kleineren Querschnitt als weiter radial außen auf. Das radial innere Ende 56 weist insbesondere eine in Umfangsrichtung und Axialrichtung verlaufende Endfläche auf.

Jeder Stützfinger 28 hat eine erste und eine zweite Seitenfläche 58.1, 58.2, die im Wesentlichen in axialer und radialer Richtung verlaufen und sich von radial außen nach radial innen gesehen einander annähern. An diesen Seitenflächen 58.1, 58.2 liegen die in den Wicklungskopf 40 übergehenden Enden der geradlinigen Leiterabschnitte 38 an.

Die Stützfinger 28 werden zu Beginn des Fügevorganges in einer in Fig. 6 gezeigten Grundstellung 66 bereitgestellt. In der Grundstellung überdecken die Stützfinger 28 jeweils eine in die axiale Richtung weisende Endfläche einer der Nutbegrenzungen 36 vollständig.

In der Grundstellung 66 sind die Stützfinger 28 insbesondere derart angeordnet, dass die Seitenflächen 58.1, 58.2 der Stützfinger 28, die im Wesentlichen in axialer und radialer Richtung verlaufen, mindestens mit zur Mitte der Nut 14 hin weisenden Nutseiten 60 fluchten. Bei der Ausführung von Fig. 6 stehen die Seitenflächen 58.1, 58.2 in Umfangsrichtung über Kanten der Nutbegrenzungen 36 und über die zur Mitte der Nut 14 hin weisenden Nutseiten 60 hinweg zur Mitte der jeweils begrenzten Nut 14 hin vor.

Die Stützfinger 28 weisen außerdem abgerundete oder an Eckkanten 62 abgeflachte im Wesentlichen in Axialrichtung weisende Oberseiten 63 auf. Die Eckkanten 62 sind zum Abstützen der seitlichen gebogenen Bereiche Wicklungsköpfe 40 ausgebildet.

Der Stützfingerbewegungsmechanismus 30 ist zur radialen Bewegung der Stützfinger 28 ausgebildet. Dies ist in Fig. 6 durch mehrere Bewegungseinheiten 64 angedeutet. Dies können einzelne Aktoren sein, die durch die Steuerung 30 angesteuert werden, oder Umsetzelemente eines Getriebes, das die Bewegung eines durch die Steuerung 30 angesteuerten Aktors in eine Radialbewegung aller angeschlossener Stützfinger 28 umwandelt. Beispiele für derartige Getriebe sind aus [14] und [15] bekannt.

Bei einigen Ausführungsformen des Fügeverfahrens werden die Stützfinger 28 nur am Anfang des Fügeverfahrens zugestellt und bleiben bis zum Ende des Prozesses an Position.

Hierbei wird über die Axialkrafteinleiteinrichtung 80 die axiale Kraft F_{A} auf die Wickelköpfe 40 ausgeübt, so dass die daraus resultierende Kraft Fᵣₑₛ u zur Expansion beiträgt und die Expansionskraft F_{E} teils von den Schiebern 54 und teils von Krafteinleitelementen 82 der Axialkrafteinleiteinrichtung 80 bereitgestellt wird.

Die Axialkrafteinleiteinrichtung 80 zum Einleiten der axialen Kraft F_{A} auf die Wickelköpfe 40 kann unterschiedlich ausgebildet sein. Insbesondere weist die Axialkrafteinleiteinrichtung 82 wenigstens ein Krafteinleitungselement 82 auf, das mittels eines oder mehrerer durch die Steuerung 32 angesteuerter Axial-Aktoren 86 (im relativ zu dem Bauteil 16 mit der darin einzufügenden Spulenwicklung 12 axial bewegbar ist, um die axiale Kraft F_{A} einzuleiten.

Wie in Fig. 8 dargestellt ist, kann die Axialkrafteinleiteinrichtung 80 Axialkrafteinleitelemente 82 auf beiden axialen Seiten der Fügeanordnung 46 aufweisen. Die axiale Kraft F_{A} kann somit auf beiden Seiten des Bauteils 16 bzw. des Stators 20 wirken.

Bei einigen Ausführungsformen kann das Axialkrafteinleitelement 82 oder eines von axial gegenüberliegenden Axialkrafteinleitelementen 82 stationär sein, und der Verbund aus Fügeeinrichtung 24, Bauteil 16 und Spulenwicklung 12 kann auf das stationäre Axialkrafteinleitelement 82 zu bewegt werden. Bei anderen Ausführungsformen werden die Axialkrafteinleitelement 82 jeweils mittels eines Axial-Aktors 86 axial bewegt oder mit der axialen Kraft F_{A} beaufschlagt.

Wie in Fig. 9 dargestellt, weist bei einigen Ausführungsformen das wenigstens eine Krafteinleitelement 82 der Axialkrafteinleiteinrichtung 80 einen ringförmigen Stempel 84 mit einem entsprechend in axialer Richtung wirkenden Axial-Aktor 86 auf. Die Axial-Aktoren 86 sind hier als z.B. pneumatisch oder hydraulisch wirkende Zylinder dargestellt, können aber auch auf andere Weise verwirklicht sein.

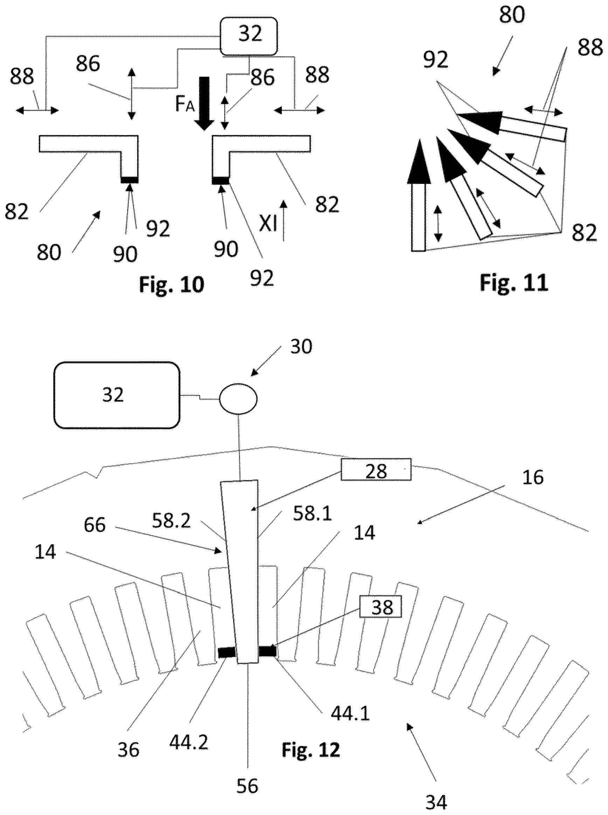

Bei anderen Ausführungsformen, die in Fig. 10 und 11 dargestellt sind, können mehrere Krafteinleitelemente 82 vorgesehen sein, die mittels entsprechender Axial-Aktoren 86 und Radial-Aktoren 88 oder Getrieben, wie sie oben für den Stützfingerbewegungsmechanismus erläutert worden sind, axial und radial bewegbar sind. Beispielsweise sind mehrere Krafteinleitungselemente 82 in einem Umfangsbereich vorgesehen, z.B. über den Umfang oder einen Umfangssektor verteilt angeordnet.

Bei einigen Ausführungsformen können dabei die einzelnen Axial-Aktoren 86 der unterschiedlichen Krafteinleitungselemente 82 auf unterschiedlichen Umfangspositionen zur Einstellung der individuellen axialen Kraft F_{A} unterschiedlich angesteuert werden.

Bei einigen Ausführungsformen erfolgt die Einleitung der axialen Kraft F_{A} auch nur partiell an ausgewählten Stellen. Dies ist insbesondere durch individuelle Ansteuerung der Aktoren 86, 88 von an unterschiedlichen Umfangspositionen angeordneten Krafteinleitelementen 82 möglich.

Bei einigen Ausführungsformen wird im Bereich von Anschlussdrähten (zum Beispiel Enden eines Wellenwicklungsdrahts zum Anschließen der Spulenwicklung 12 an ein Verschaltelement) die Kraft F_{A} reduziert eingeleitet. Dies kann durch Vorsehen bestimmter individuell ausgebildeter Krafteinleitelemente 82 an diesen Stellen oder ebenfalls durch entsprechende Ansteuerung der hier befindlichen Krafteinleitelemente 82 erfolgen.

Bei einigen Ausführungsformen wird mit einem elastischen Krafteinleitelement 82 gedrückt, das sich optimal an den Wickelkopf 40 anpassen kann. Hierzu ist beispielsweise eine Anpressfläche 90 des jeweiligen Krafteinleitelements 82 mit einem Elastomer 92 versehen.

Die axial kraftübertragenden Krafteinleitelemente 82 können sich bei einigen Ausführungsformen, wie sie in Fig. 10 und 11 angedeutet sind, radial mit den Wicklungen - Leiter 44.1 - 44-4 - nach außen mitbewegen, um so Relativbewegungen zu vermeiden. Dies kann über die Ansteuerung der Radial-Aktoren 88 erfolgen. Bei einigen Ausführungsformen bewegen sich dabei die Krafteinleitelemente 82 gemeinsam radial, so dass sie durch einen gemeinsamen Radial-Aktor 88 zur Radialbewegung und ein entsprechendes Getriebe angetrieben werden können. Bei anderen Ausführungsformen ist pro Krafteinleitelement 82 oder pro einer Gruppe der Krafteinleitelemente 82 ein gesonderter Radial-Aktor 88 vorgesehen.

Bei radial statisch positionierten Krafteinleitelementen 82 - wie beispielsweise der in Fig. 9 gezeigten Art - kann durch wechselseitiges Andrücken und Entspannen eine radiale Bewegung der Leiter 44.1 - 44.4 relativ zu den Krafteinleitelementen 82 bei deren Einfügen erleichtert werden.

Wie oben erläutert bleiben bei einigen Ausführungsformen die vorzugsweise vorgesehenen Stützfinger 28 während des Einfügens in der in Fig. 6 dargestellten Position (Grundstellung). Bei anderen Ausführungsformen, die im Folgenden noch anhand der Darstellung der Fig. 6 und den Fig. 12 bis 15 erläutert werden, kann das Expandieren zusätzlich durch gesonderte Ansteuerung einer Bewegung der Stützfinger 28 während des Expandierens unterstützt werden.

Einige Ausführungsformen des Fügeverfahrens umfassen den Schritt:
f) Mitbewegen der Stützfinger 28 radial mit der Spulenwicklung 12, um Leiterabschnitte 38 und/oder Wicklungsköpfe 40 beim Einfügen zu führen.

Hierbei wird der Ablauf noch derartig verändert, dass einige einzelne Kräfte nicht mehr zeitgleich, sondern zeitversetzt auftreten. Dadurch können sich die Kräfte nicht addieren und die Gesamtbelastung auf die Drähte bleibt möglichst gering.

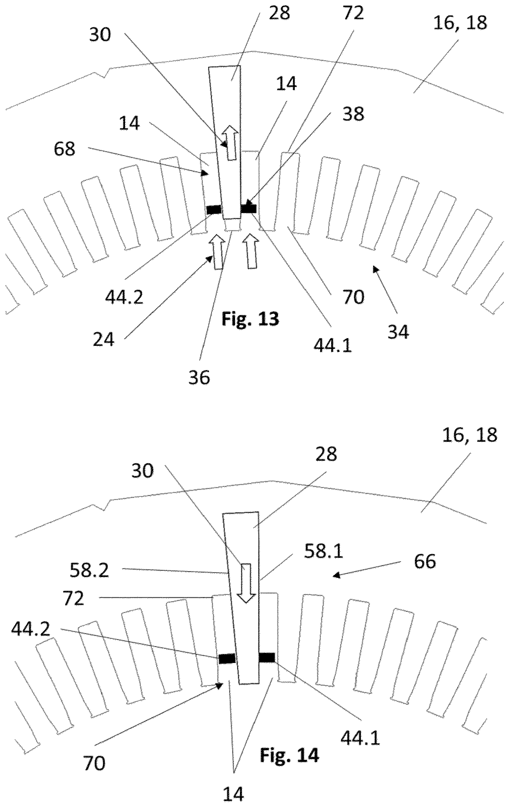

Wie in Fig. 12 und 13 gezeigt, werden hierzu die ohnehin zum Zustellen beweglich ausgeführten Stützfinger 28 mit dem Expandiervorgang synchronisiert, damit sie beim Expandieren mit den Leitern 44.1-44.4 nach außen mitfahren können.

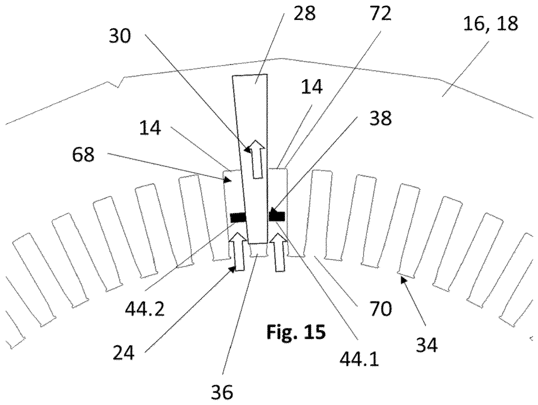

Wie weiter in den Fig. 14 und 15 dargestellt ist, stoppt bei der dargestellten Ausführungsform der Expandiervorgang nach einem bestimmten Hub, die Stützfinger 28 werden wieder zugestellt und der Vorgang wiederholt sich, bis die Leiter 44.1-44.4 der Spulenwicklung 12 vollständig expandiert sind. Mit diesem schrittweise mitfahrenden Stützfinger 28 wird die Reibung zwischen Stützfinger 28 und Leiter 44.1-44.4 während dem Expandiervorgang herausgenommen, ohne dass die Funktion des Stützfingers 28 verloren geht.

Die Stützfinger 28 wirken bei diesem Prinzip unterstützend, indem die Reibung zwischen Leiter 44.1-44.4 und Stützfinger 28 als ziehende Kraft für das Expandieren genutzt wird.

Im Einzelnen zeigt Fig. 12 das Zustellen des Stützfingers 28 in der Grundstellung 66 und das anfängliche Einfügen der Leiter 44.1, 44.2. Fig. 13 zeigt, wie Leiter 44.1, 44.2 und Stützfinger 28 gemeinsam radial nach außen fahren. Beispielsweise werden die Stützfinger 28 mit der Spulenwicklung 12 aus der Grundstellung 66 über eine Teilstrecke bis zu einer radialen Zwischenposition 68 zwischen der radial nach innen offenen Mündung 70 und dem radial außen liegenden Nutgrund 72 der zugeordneten Nut 14 mitbewegt. In dieser radialen Zwischenposition 68 - Umkehrposition - erfolgt eine Umkehr der Bewegung der Stützfinger 28.

Wie man Fig. 12 und 13 entnehmen kann, liegen in der Grundstellung 66 Leiter 44.1, 44.2 der Spulenwicklung 12 an den Seitenflächen 58.1, 58.2 der Stützfinger 28 an. In der Zwischenposition 68 liegen die Leiter 44.1, 44.2 immer noch an den Seitenfläche 58.1, 58.2 an oder beginnen gerade, an zur Nutmitte hin weisenden Nutwänden anzuliegen.

Wie man Fig. 14 entnehmen kann, werden die Leiter 44.1, 44.2 beim Zurückführen der Stützfinger 28 an deren Seitenflächen 58.1, 58.2 in Umfangsrichtung gedrängt.

Fig. 15 zeigt das Nachfahren des Stützfingers 28. Der Stützfinger 28 kann z.B. wieder in die Grundposition 66 zurückgefahren werden. Denkbar ist auch, dass der Stützfinger 28 in eine weitere Zwischenposition (nicht dargestellt) zwischen der Grundstellung 66 und der in Fig. 7 gezeigten Umkehrposition 68 gefahren wird. Fig. 9 zeigt das erneute gemeinsame Fahren von Stützfinger 28 und Leitern 44.1, 44.2 radial nach außen.

Durch die zeitliche Auftrennung der Kräfte wird der Prozess stabiler und die Gefahr für Drahtbeschädigungen reduziert sich.

### Bezugszeichenliste:

- 10: Fügevorrichtung
- 12: Spulenwicklung
- 14: Nut (Bauteil)
- 16: Bauteil
- 18: Blechpaket
- 20: Stator
- 22: Halterung
- 24: Fügeeinrichtung
- 26: Stützfinger-Anordnung
- 28: Stützfinger
- 30: Stützfingerbewegungsmechanismus
- 32: Steuerung
- 34: Nut-Anordnung
- 36: Nutbegrenzung
- 38: geradlinige Leiterabschnitt
- 40: Wicklungskopf
- 42: Fügewerkzeug
- 44.1-44-4: Leiter
- 46: Fügeanordnung (Fügevorrichtung - Bauteil - Spulenwicklung)
- 48: Isolationspapier
- 50: Leitblech
- 52: Werkzeugnut
- 54: Schieber
- 56: radial inneres Ende
- 58.1: erste Seitenfläche
- 58.2: zweite Seitenfläche
- 60: Nutseite
- 62: Eckkante
- 63: Oberseite
- 64: Bewegungseinheit
- 66: Grundstellung
- 68: Zwischenposition (Umkehrposition)
- 70: Mündung der Nut
- 72: Nutgrund
- 80: Axialkrafteinleiteinrichtung
- 82: Krafteinleitelement
- 84: Stempel
- 86: Hubaktor (axiale Bewegung)
- 88: Radial-Aktor (radiale Bewegung)
- 90: Anpressfläche
- 92: Elastomer
- F_{E}: Expandierkraft
- Fᵣ: radiale Kraft
- F_{A}: axiale Kraft
- Fᵣₑₛ: resultierende Kraft
- Fᵣₑₛ, u: in Umfangsrichtung wirkende resultierende Kraft

## Patentansprüche

1. Fügeverfahren zum Einfügen einer Spulenwicklung (12) in ein Bauteil (16) einer elektrischen Maschine, umfassend:
a) Bereitstellen des Bauteils (16) mit einer ringförmigen Nut-Anordnung (34) von nach innen öffnenden Nuten (14), die durch nach innen ragende Nutbegrenzungen (36) begrenzt sind,
b) Bereitstellen mit einem Spulendurchmesser, der gleich einem oder kleiner als ein Innendurchmesser der ringförmigen Nut-Anordnung (34) ist, aufgewickelten Spulenwicklung (12) innerhalb der ringförmigen Nut-Anordnung (34), wobei die Spulenwicklung (12) eine Vielzahl geradliniger Leitungsabschnitte (38), die durch dachförmige Wicklungsköpfe (40) verbunden sind, aufweist,
d) Expandieren der Spulenwicklung (12) nach außen unter Einführen der Leiterabschnitte (38) der Spulenwicklung (12) in die Nuten (14), und
e) Ausüben einer axialen Kraft (F_{A}) auf die dachförmigen Wicklungsköpfe (40) während Schritt d), um das Expandieren zu unterstützen.

2. Fügeverfahren nach Anspruch 1, **dadurch gekennzeichnet,**
**dass** Schritt a) wenigstens einen oder mehrere der Schritte umfasst:
a1) Bereitstellen eines ringförmigen Grundkörpers eines Stators (20);
a2) Bereitstellen eines Blechpakets (18) eines Stators (20),
a3) Bereitstellen des Bauteils (16) mit Isolationspapieren (48) in den einzelnen Nuten.

3. Fügeverfahren nach einem der voranstehenden Ansprüche, **dadurch gekennzeichnet,**
**dass** Schritt b) wenigstens einen oder mehrere der folgenden Schritte umfasst:
b1) Bereitstellen einer aus einzelnen Wellenwicklungsdrähten gebildeten Spulenmatte zum Bilden der Spulenwicklung (12);
b2) Bereitstellen der Spulenwicklung (12) aus Drähten mit rechteckigem Drahtquerschnitt;
b3) Bereitstellen der Spulenwicklung (12) aus Drähten mit Isolierschicht;
b4) Bereitstellen der Spulenwicklung (12) auf einem Fügewerkzeug (42), das in den Innenraum innerhalb des Bauteils (16) mit der ringförmigen Nut-Anordnung (34) von nach innen offenen Nuten (14) eingefügt wird;
b5) Komprimieren der Spulenwicklung (12) mit geringerem Durchmesser auf einem Fügedorn als Fügewerkzeug (42);
b6) Bereitstellen der Spulenwicklung (12) derart, dass die geradlinigen Leiterabschnitte (38) in Fügewerkzeugnuten (52) zwischen radial beweglichen Führungselementen (22) eingefügt sind.

4. Fügeverfahren nach einem der voranstehenden Ansprüche, **gekennzeichnet durch** den vor Schritt d) durchzuführenden Schritt:
c) Bereitstellen von Stützfingern (28) axial neben den Nutbegrenzungen (36), vorzugsweise derart, dass Schritt c) wenigstens einen oder mehrere der folgenden Schritte umfasst:
c1) Bereitstellen je eines Stützfingers (28) pro Nutbegrenzung (36) des Bauteils (16);
c2) Bereitstellen von keilförmigen Stützfingern (28), die von radial außen nach radial innen gesehen verjüngt ausgebildet sind;
c3) Bereitstellen der Stützfinger (28) mit einer ersten und einer zweiten Seitenfläche (58.1, 58.2), die im Wesentlichen in axialer und radialer Richtung verlaufen und sich von radial außen nach radial innen gesehen einander annähern,
c4) Bereitstellen von Stützfingern (28) in einer Grundstellung (66) derart, dass sie jeweils eine in die axiale Richtung weisende Endfläche einer der Nutbegrenzungen (36) vollständig überdecken;
c5) Bereitstellen von Stützfingern (28) in einer Grundstellung (66) derart, dass Seitenflächen (58.1, 58.2) der Stützfinger (28), die im Wesentlichen in axialer und radialer Richtung verlaufen, mindestens mit zur Mitte der Nut (14) hin weisenden Nutseiten (60) fluchten oder in Umfangsrichtung über Kanten der Nutbegrenzungen (36) und/oder über die zur Mitte der Nut (14) hin weisenden Nutseiten (60) hinweg zur Mitte der jeweils begrenzten Nut (14) hin vorstehen,
c6) Bereitstellen von Stützfingern (28) mit abgerundeten oder an Eckkanten (62) abgeflachten im Wesentlichen in Axialrichtung weisenden Oberseiten (63);
c7) Bereitstellen einer ringförmigen Stützfinger-Anordnung (26) von Stützfingern (28) an einem Stützfingerbewegungsmechanismus (30) zur radialen Bewegung der Stützfinger (28).

5. Fügeverfahren nach einem der voranstehenden Ansprüche, **dadurch gekennzeichnet,**
**dass** Schritt d) wenigstens einen oder mehrere der folgenden Schritte umfasst:
d1) Auferlegen einer radial nach außen gerichteten Kraft (Fᵣ) auf Leiter (44.1-44.4) der Spulenwicklung (12), um diese radial nach außen zu expandieren und in die Nuten (14) einzufügen;
d2) Auferlegen einer radial gerichteten Kraft auf Wellenwicklungsköpfe (40) der Spulenwicklung;
d3) Einschieben der geradlinigen Leiterabschnitte (38) zum Füllen jeder Nut (14) mit mehreren Lagen Leiterabschnitten (38);
d4) Bewegen der geradlinigen Leiterabschnitte (38) innerhalb der Nut (14) radial nach außen.

6. Fügeverfahren nach einem der voranstehenden Ansprüche, **dadurch gekennzeichnet,**
**dass** Schritt e) wenigstens einen oder mehrere der folgenden Schritte umfasst:
e1) Ausüben einer axial zur Mitte des Bauteils (16) hin gerichteten Kraft (F_{A}) auf eine Spitze eines Wellenwicklungskopfes (40), der zwei in Nuten (14) des Bauteils (16) einzufügende und/oder in den Nuten (14) radial nach außen zu bewegende geradlinige Leiterabschnitte (38) verbindet, um die Leiterabschnitte (38) in Umfangsrichtung voneinander weg zu drängen;
e2) Ausüben der axial gerichteten Kraft (F_{A}) mittels Krafteinleitelementen (82), die axial und radial verschiebbar sind;
e3) Mitbewegen eines Krafteinleitelements (82), das axial Kraft (F_{A}) auf wenigstens einen Wellenwicklungskopf (40) ausübt, in radialer Richtung zusammen mit dem Wellenwicklungskopf (40);
e4) Ausüben der axial gerichteten Kraft (F_{A}) in Abhängigkeit von dem Maß des Expandierens;
e5) Ausüben von axial entgegengerichtet zueinander wirkenden Kräften (F_{A}) auf Wellenwicklungsköpfe (40) auf beiden axialen Seiten des Bauteils (16);
e6) Einleiten der axialen Kraft (F_{A}) nur partiell an ausgewählten Stellen;
e7) Einleiten einer relativ zu der an anderen Bereichen der Spulenwicklung (12) auferlegten axialen Kraft reduzierten axialen Kraft im Bereich von Anschlussleitungen der Spulenwicklung (12);
e8) Einleiten der axialen Kraft (F_{A}) mittels eines elastischen Krafteinleitelements (82), das sich an den Wicklungskopf (40) anpassen kann;
e9) Einleiten der axialen Kraft (F_{A}) mittels in radialer Richtung beim Einleiten statisch angeordneter Krafteinleitelemente (82), die wechselweise andrücken und
entspannen, um die radiale relative Bewegung der Spulenwicklungen (12) zu erleichtern.

7. Fügevorrichtung (10) zum Einfügen einer Spulenwicklung (12) in ein Bauteil (16) einer elektrischen Maschine, umfassend:
eine Halterung (22) für das Bauteil (16), das mit einer ringförmigen Nut-Anordnung (34) von nach innen öffnenden Nuten (14), die durch nach innen ragende Nutbegrenzungen (36) begrenzt sind, versehen ist;
eine Fügeeinrichtung (24) mit einem Fügewerkzeug (42), das zum Anordnen der mit einem Spulendurchmesser, der gleich einem oder kleiner als ein Innendurchmesser der ringförmigen Nut-Anordnung (34) ist, aufgewickelten Spulenwicklung (12), die eine Vielzahl geradliniger Leitungsabschnitte (38), die durch dachförmige Wicklungsköpfe (40) verbunden sind, innerhalb der ringförmigen Nut-Anordnung (34) ausgebildet ist, wobei die Fügeeinrichtung (24) zum Expandieren der Spulenwicklung (12) nach außen unter Einführen der Leiterabschnitte (38) der Spulenwicklung (12) in die Nuten (14) ausgebildet ist, und
eine Axialkrafteinleiteinrichtung (80) die dazu eingerichtet ist, eine axiale Kraft (F_{A}) auf die dachförmigen Wicklungsköpfe (40) während des Expandierens und
Einfügens der Spulenwicklung (12) auszuüben, um das Expandieren zu unterstützen.

8. Fügevorrichtung (10) nach Anspruch 8, ferner **gekennzeichnet durch** eine Stützfinger-Anordnung (26) aus radial beweglichen Stützfingern (28), die axial neben den Nutbegrenzungen (36) anzuordnen sind,
vorzugsweise derart, dass die Stützfinger-Anordnung (26):
8.1 je einen Stützfinger (28) pro Nutbegrenzung (36) des Bauteils (16) umfasst; und/oder
8.2 keilförmige Stützfinger (28) aufweist, die von radial außen nach radial innen gesehen verjüngt ausgebildet sind; und/oder
8.3 Stützfinger (28) mit einer ersten und einer zweiten Seitenfläche (58.1, 58.2), die im Wesentlichen in axialer und radialer Richtung verlaufen und sich von radial außen nach radial innen gesehen einander annähern, aufweist; und/oder
8.4 zum Zustellen der Stützfinger (28) in einer Grundstellung (66) derart ausgebildet ist, dass die Stützfinger (28) jeweils eine in die axiale Richtung weisende Endfläche der jeweiligen Nutbegrenzungen (36) vollständig überdecken; und/oder
8.5 zum Zustellen der Stützfinger (28) in einer Grundstellung (66) derart ausgebildet ist, dass Seitenflächen (58.1, 58.2) der Stützfinger (28), die im Wesentlichen in axialer und radialer Richtung verlaufen, mindestens mit zur Mitte der Nut (14) hin weisenden Nutseiten (60) fluchten oder in Umfangsrichtung über Kanten der Nutbegrenzungen (36) und/oder über die zur Mitte der Nut (14) hin weisenden Nutseiten (60) hinweg zur Mitte der jeweils begrenzten Nut (14) hin vorstehen, und/oder
8.6 Stützfinger (28) mit abgerundeten oder an Eckkanten (62) abgeflachten im Wesentlichen in Axialrichtung weisenden Oberseiten (63) aufweisen.

9. Fügevorrichtung (10) nach einem der Ansprüche 7 oder 8, **gekennzeichnet durch** eine Steuerung (32), die dazu ausgebildet ist, die Axialkrafteinleitungseinrichtung (80) abhängig von der Expansionsbewegung, die **durch** die Spulenwicklung (12) mittels der Fügeeinrichtung (24) durchgeführt wird, zu steuern.

10. Fügevorrichtung (10) nach einem der Ansprüche 7 bis 9, **dadurch gekennzeichnet,**
**dass** die Axialkrafteinleiteinrichtung (80)
10.1 dazu eingerichtet ist, eine axial zur Mitte des Bauteils (14) hin gerichtete Kraft (F_{A}) auf eine Spitze eines Wellenwicklungskopfes (40), der zwei in Nuten (14) des Bauteils (16) einzufügende und/oder in den Nuten (14) radial nach außen zu bewegende geradlinige Leiterabschnitte (38) verbindet, auszuüben, um die Leiterabschnitte (38) in Umfangsrichtung voneinander weg zu drängen; und/oder
10.2 Krafteinleitungselemente (82) aufweist, die axial und radial verschiebbar sind; und/oder
10.3 wenigstens ein Krafteinleitungselement (82) aufweist, das dazu ausgebildet ist, sich in radialer Richtung zusammen mit dem Wellenwicklungskopf (40), auf den es die axiale Kraft (F_{A}) ausübt, mitzubewegen; und/oder
10.4 Krafteinleitungselemente (82) zum Ausüben von axial entgegengerichtet zueinander wirkenden Kräften auf Wellenwicklungsköpfe (40) auf beiden axialen Seiten des Bauteils (16) aufweist; und/oder
10.5 dazu eingerichtet ist, die axiale Kraft (F_{A}) nur partiell an ausgewählten Stellen einzuleiten; und/oder
10.6 dazu eingerichtet ist, eine relativ zu der an anderen Bereichen der Spulenwicklung (12) auferlegten axialen Kraft reduzierte axiale Kraft im Bereich von Anschlussleitungen der Spulenwicklung (12) einzuleiten; und/oder
10.7 wenigstens ein elastisches Krafteinleitungselement (82) aufweist, das sich an den zu drückenden Wicklungskopf (40) anpassen kann; und/oder
10.8 beim Einleiten der axialen Kraft (F_{A}) radial statisch angeordnete Krafteinleitungselemente (82) aufweist, die dazu eingerichtet sind, wechselweise anzudrücken und zu entspannen, um die radiale relative Bewegung der Spulenwicklungen (12) zu erleichtern.

11. Fügeanordnung (46) umfassend
eine Fügevorrichtung (10) nach einem der Ansprüche 7 bis 10,
das Bauteil (16) mit der ringförmigen Nut-Anordnung (34) nach innen öffnender Nuten (14) und
die in das Bauteil (16) mittels der Fügevorrichtung (10) einzufügende Spulenwicklung (12).

12. Fügeanordnung (46) nach Anspruch 11, **dadurch gekennzeichnet,**
**dass** das Bauteil (16)
12.1 ein ringförmiger Grundkörper eines Stators (20) ist; und/oder
12.2 ein Blechpaket (18) eines Stators (20) ist; und/oder
12.3 Isolationspapiere (48) in den einzelnen Nuten (14) aufweist.

13. Fügeanordnung (46) nach Anspruch 11 oder 12, **dadurch gekennzeichnet, dass** die Spulenwicklung (12)
13.1 eine aus einzelnen Wellenwicklungsdrähten gebildete Spulenmatte aufweist; und/oder
13.2 eine Spulenmatte aus Drähten mit rechteckigem Drahtquerschnitt aufweist; und/oder
13.3 eine Spulenmatte aus Drähten mit Isolierschicht aufweist.

14. Steuerung (32) für eine Fügevorrichtung (10) nach einem der Ansprüche 7 bis 10 oder für eine Fügeanordnung (46) nach einem der Ansprüche 11 bis 13, dazu eingerichtet, die Fügevorrichtung (10) zum Durchführen des Fügeverfahrens nach einem der Ansprüche 1 bis 6 anzusteuern.

15. Computerprogramm, umfassend Anweisungen, die die Fügevorrichtung (10) nach einem der Ansprüche 7 bis 10 oder die Fügevorrichtung (10) der Fügeanordnung (46) nach einem der Ansprüche 11 bis 13 dazu veranlassen, das Fügeverfahren nach einem der Ansprüche 1 bis 6 durchzuführen.
